# EUROPEAN PATENT APPLICATION

(11) **EP 0 998 012 A1**
(43) Date of publication of application: **03.05.2000**
(21) Application number: 00101617.9
(22) Date of filing: 09.11.1993
(51) Int. Cl.: H02K 7/08, H02K 5/173

(54) **Integral bearing type electric motor**

(30) Priority: 09.11.1992 JP 32364592
(62) Divisional of application: 97201208.2
(71) Applicant: MINEBEA KABUSHIKI-KAISHA, Kitasaku-gun, Nagano-ken (JP)
(72) Inventor: Obara, Rikuro, Kitasaku-gun, Nagano-ken (JP)
(74) Representative: Johnstone, Douglas Ian

(57) **Abstract**

An integral bearing type electric motor comprising a spindle (5) integrally formed with a hub (9) and a stator including a stator yoke (4) and a coil (3) mounted thereon. The spindle has larger and smaller diameter portions and is supported for rotation in a sleeve (10) by means of first and second rows of balls (13, 14). Balls (13) of the first row run between a race (6) formed in the larger spindle portion and a race (11) formed in the sleeve (10) and balls (14) of the second row run between a race (7) formed in an outer surface of a ring (8) mounted on the smaller spindle portion and a further race (12) formed in the sleeve (10). The yoke (4) and coil (3) are mounted on the sleeve (10) internally of a magnet (15) supported by the rotor (9).

## Description

This invention relates to electric motors mainly applied to OA apparatus.

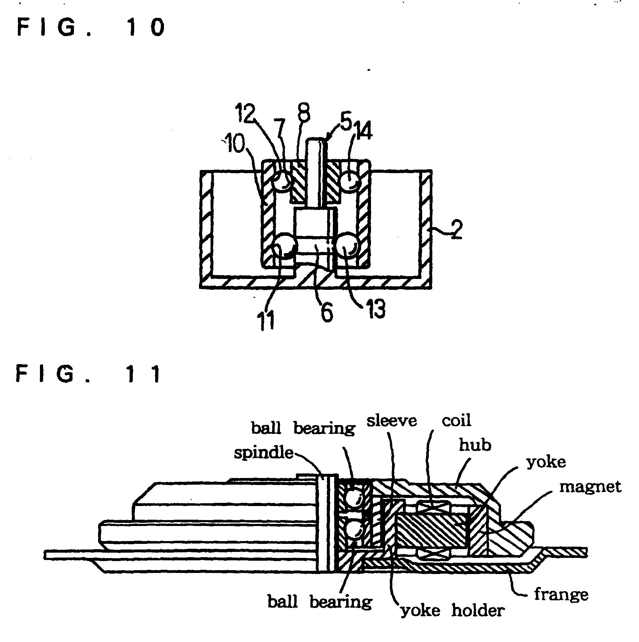

Fig. 11 shows an electric motor, for instance a spindle motor. The motor comprises a spindle, a hub as rotor, a flange as base, and a yoke holder. The spindle is supported in a ball bearing, which comprises an inner and an outer ring provided in a bearing sleeve. These components are provided as independent parts, and such components as the hub, flange, yoke holder, etc. are separate parts from the ball bearing.

Since the prior art motor comprises the hub, flange and yoke holder as separate parts from the ball bearing, it has a large number of components. Besides, in manufacture a step of assembling the components on the ball bearing is necessary. The manufacture thus involves a large number of steps and leads to a high cost.

Further, since in the prior art structure the individual components are independent parts, it is not easy to provide accurate raceway run-out with side when assembling the individual components. Therefore, improvement of the raceway run-out with side can not be substantially expected.

An object of the invention is to provide an electric motor, particularly, a spindle motor, which comprises a reduced number of components and can reduce the steps of assembling to permit reduction of the cost of manufacture to be expected, as well as permitting improvement of the race-way run-out with side.

To attain the above object, it is a basic structure of the electric motor according to the invention that a hub as rotor, a flange as base or a stator yoke holder is molded together with a sleeve, a spindle or an inner ring of a bearing body.

More specifically, according to the invention there is provided an integral bearing type electric motor, which comprises a bearing body including a spindle, a sleeve surrounding the spindle, an inner or outer ring fitted in or on the spindle, and balls provided between the spindle and sleeve, between the spindle and outer ring or between the inner ring and sleeve, a hub for the rotor of the motor, a flange for the base of the motor or a stator yoke holder being formed by molding together with the sleeve, spindle or inner ring of the bearing body.

According to the invention, there is further provided an integral bearing type electric motor, which comprises a bearing body including a stepped spindle having a large and a small diameter portion, a sleeve surrounding the spindle, the spindle having a large diameter portion thereof formed with an outer race for one ball row, balls in one row being provided between the outer race and an inner race formed in the sleeve, and an inner ring fitted on the small diameter portion of the spindle and having an outer race, balls in another row being provided between the inner ring outer race and a corresponding inner race formed in the sleeve, a hub of the motor being formed by molding together with the sleeve of spindle.

According to the invention, there is further provided an integral bearing type electric motor, which comprises a bearing body including a stepped spindle having a large and a small diameter portion, a sleeve surrounding the spindle, the spindle having a large diameter portion thereof formed with an outer race for one ball row, balls in one row being provided between the outer race and an inner race formed in the sleeve, and an inner ring fitted on the small diameter portion of the spindle and having an outer race, balls in another row being provided between the inner ring outer race and a corresponding inner race formed in the sleeve, a flange as the base of the motor being formed by molding together with the sleeve or spindle of the bearing body.

According to the invention, there is further provided an integral bearing type electric motor, which comprises a bearing body including a stepped spindle having a large and a small diameter portion, a sleeve surrounding the spindle, the spindle having a large diameter portion thereof formed with an outer race for one ball row, balls in one row being provided between the outer race and an inner race formed in the sleeve, and an inner ring fitted on the small diameter portion of the spindle and having an outer race, balls in another row being provided between the inner ring outer race and a corresponding inner race formed in the sleeve, a yoke holder having a yoke mounting rib formed on the outer periphery edge being formed by molding together with the sleeve of the bearing body.

Preferred embodiments of electric motor using composite bearings according to the invention will now be described by way of example with reference to the accompanying drawings, in which:-
Fig. 1 is a sectional view showing a first embodiment of the invention;
Fig. 2 is a sectional view showing a second embodiment of the invention;
Fig. 3 is a sectional view showing a third embodiment of the invention;
Fig. 4 is a sectional view showing a fourth embodiment of the invention;
Fig. 5 is a sectional view showing a fifth embodiment of the invention;
Fig. 6 is a sectional view showing a sixth embodiment of the invention;
Fig. 7 is a sectional view showing a seventh embodiment of the invention;
Fig. 8 is a sectional view showing an eighth embodiment of the invention;
Fig. 9 is a sectional view showing a ninth embodiment of the invention;
Fig. 10 is a sectional view showing a tenth embodiment of the invention; and
Fig. 11 is a sectional view showing a prior art spindle motor.

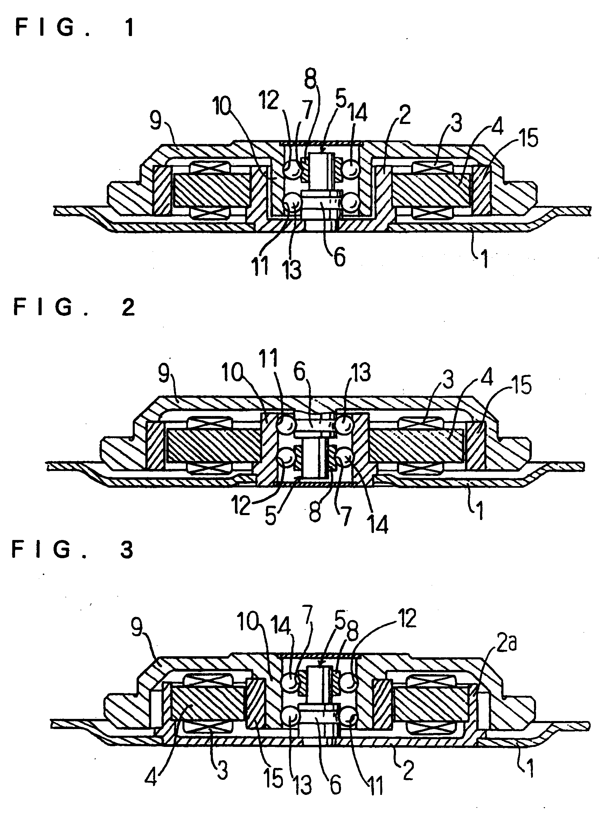

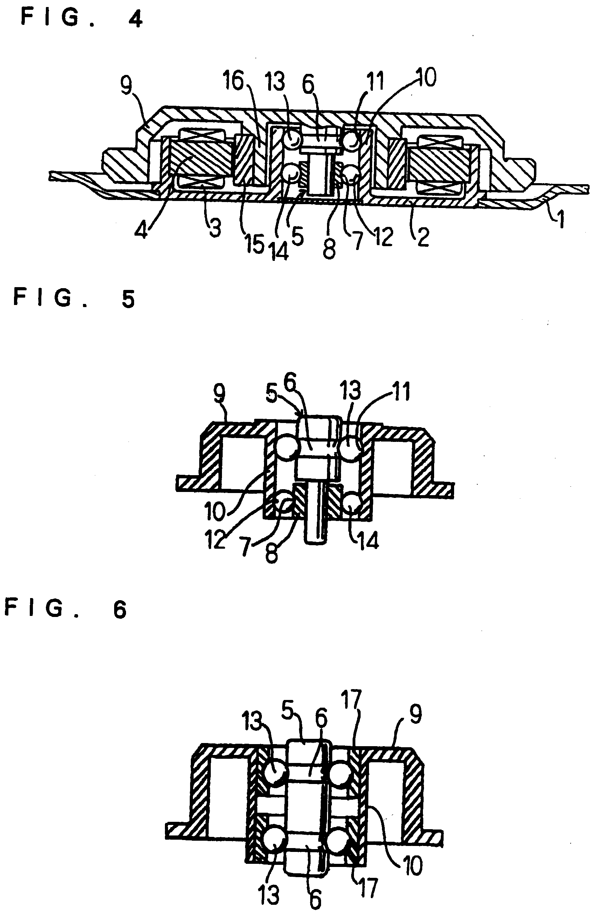

Figs. 1 and 2 show outer rotor type spindle motors according to the invention.

In the embodiment shown in Fig. 1, a flange 1 as base has its central portion provided with a cylindrical yoke holder , and a stator yoke 4 with a coil 3 is provided around the yoke holder. A spindle 5 is secured at its lower end to the center of the flange, more specifically the center of the bottom of a yoke holder 2. The spindle is a two-step spindle with a small diameter upper portion.

The outer periphery of the lower large diameter portion of the spindle is formed with a race 6, and an inner ring 8 with a race 7 is fitted on the small diameter portion of the spindle.

According to the invention, a hub 9 as rotor has a central integral sleeve 10 for a bearing body. The inner periphery of the sleeve 10 has juxtaposed races 11 and 12 respectively corresponding to the large diameter portion race of the spindle and the race of the inner ring. Balls 13 and 14 are provided between mating ones of the races. The sleeve 10, balls 13 and 14, inner ring 8 and race 6 of the large diameter portion of the spindle, form the ball bearing body, which supports the hub for rotation about the spindle. A magnet 15 for forming field magnetic flux is provided on the inner periphery of the hub such that it faces the yoke.

In the embodiment shown in Fig. 2, a sleeve 10 for a ball bearing body is provided in a central portion of a flange 1. A spindle 5 is provided such that it is integral with the underside of a central portion of a hub 9. The spindle is a two-step one and vertically converse to that shown in Fig. 1, and structural relationship among spindle race 6, inner ring 8, race 7 thereof, sleeve races 11 and 12 and balls 13 and 14 is the same as that in the case of Fig. 1. In this embodiment, the status yoke 4 is mounted on the sleeve 10, and the yoke holder 2 shown in Fig. 1 is dispensed with.

Figs. 3 and 4 show inner rotor type spindle motors according to the invention.

In the embodiment shown in Fig. 3, a two-step spindle 5 is erected from the bottom center of a stator yoke holder 2 having an outer flange 1. A stator yoke 4 is mounted in the inner periphery of a cylindrical rib 2a of the stator yoke holder.

In this embodiment, the sleeve 10 for the ball bearing body is formed such that it is integral with the center of the hub 10. The structure of the ball bearing body is the same as in the embodiment of Fig. 1, but a permanent magnet is provided on the outer periphery of the sleeve 10.

In the embodiment shown in Fig. 4, a stator yoke holder 2 and sleeve 10 of the ball bearing body are integral with each other, and a spindle 5 and hub 9 are integral with each other. A stator yoke 4 is provided in the inner periphery of a rib 2a of the stator yoke holder 2, and a permanent magnet 15 is provided on the outer periphery of a cylindrical magnet holder 16, which is formed by molding such that it is integral with the center of the underside of the hub 9. The spindle is of two-step structure, and the ball bearing body is of the same structure as that in the embodiment shown in Fig. 2.

In each embodiment, the inner surface (top surface) of the flange is provided with a printed circuit board for motor driving in correspondence to the coil 3.

Beside the above embodiments, there are many variations such as those, in which the hub or flange is made integral with the sleeve, spindle, inner ring or outer ring of the ball bearing body. Some of such variations are given below.

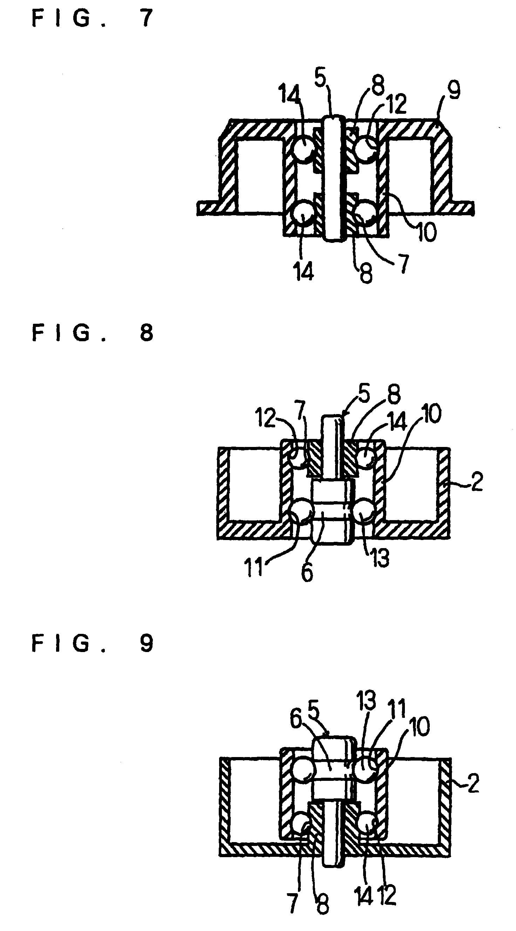

In the examples shown in Figs. 5 to 7, a hub 9 and a sleeve 10 of ball bearing body are molded together to form a one-piece molding. In the example shown in Fig. 8, the flange and sleeve 10 of ball bearing body are molded together. In the example shown in Fig. 9, the flange and inner ring 8 of ball bearing body (which inner ring is integral with the flange) are molded together. In the example shown in Fig. 10, the flange and spindle are molded together.

As has been described in the foregoing, according to the invention the hub as rotor or the flange as base or the yoke holder is molded such that it is integral with the sleeve or spindle or inner or outer ring of the bearing body. Thus, unlike the prior art bearing structure, in which the hub or flange or yoke holder is a separate part from the bearing body, assembling at the time of the manufacture can be readily made, efficient assembling can be obtained by using machines, and the cost of manufacture can be reduced, which are very beneficial in the industrial production.

Further, at least one of such parts as the hub, flange and yoke holder is preliminarily molded together with the sleeve, spindle, inner ring or outer ring of the ball bearing body. Thus, it is possible to provide a motor, which is free from raceway and has high raceway run-out with side, which does not require any centering of the spindle with respect to the component noted above during its manufacture.

Further, the composite bearing has an advantage in manufacture that pre-loading can be readily effected by urging the inner and outer rings to each other in their axial direction.

## Claims

1. An integral bearing type electric motor comprising a stator (3,4), a rotor (9) and a bearing assembly (5,8,10) including a stepped spindle (5) having a large and a small diameter portion, a sleeve (10) surrounding said spindle (5), said spindle having a large diameter portion thereof formed with an outer ball race (6) for one ball row, balls (13) in said one row being provided between said outer ball race (6) and an inner ball race (11) formed in said sleeve (10), and an inner ring (8) fitted on the small diameter portion of said spindle (5) and having an outer ball race (7), balls (14) in another ball row being provided between said outer ball race (7) of said inner ring (8) and a corresponding inner ball race (12) formed in said sleeve (10) wherein a hub (9) constituting said rotor of said motor is integrally formed with said spindle (5).

2. The electric motor of claim 1 wherein said stator (3, 4) includes a stator yoke (4) with a coil (3), and said rotor includes a magnet (15) mounted on said hub (9) so as to face said stator yoke (4).

3. The electric motor of claim 2 wherein said stator yoke (4) is mounted on an outer periphery of said sleeve (10), and said magnet (15) is mounted on an inner periphery of said hub (9).
